Europäisches Patentamt

European Patent Office

Office européen des brevets

(19)

(11) Veröffentlichungsnummer: **0 207 184**
**A1**

# (12) EUROPÄISCHE PATENTANMELDUNG

(21) Anmeldenummer: 85108280.0

(22) Anmeldetag: 04.07.85

(51) Int.Cl.⁴: **F 16 H 15/38**

(43) Veröffentlichungstag der Anmeldung:
07.01.87 Patentblatt 87/2

(84) Benannte Vertragsstaaten:
BE DE FR GB IT NL

(71) Anmelder: Helling, Jürgen, Prof. Dr.-Ing.
Botzelaer 26A
B-4680 Gemmenich(BE)

(71) Anmelder: Rohs, Ulrich, Dr.-Ing.
Roonstrasse 11
D-5160 Düren(DE)

(72) Erfinder: Helling, Jürgen, Prof. Dr.-Ing.
Botzelaer 26A
B-4680 Gemmenich(BE)

(72) Erfinder: Rohs, Ulrich, Dr.-Ing.
Roonstrasse 11
D-5160 Düren(DE)

(74) Vertreter: Rauh, Wolfgang K., Dipl.-Ing. Patentanwalt
Mittelstrasse 55
D-5100 Aachen(DE)

(54) Schwenkscheiben-Reibgetriebe.

(57) Schwenkscheiben-Reibgetriebe mit mindestens einem Antriebs- und mindestens einem Abtriebsteil (2,12 bzw.3,-13), mit konkaven Mantelprofilen und koaxialer Anordnung und zwischen diesen in einem Gehäusering (10,20) schwenkbar angeordnete, drehbare Schwenkscheiben (4,14) zur Drehkraftübertragung, mit konvexen Mantelprofilen, die jeweils gleichzeitig mit einem konkaven Mantelprofil eines Antriebs- und eines Abtriebsteiles (2,12 und 3,13) in Reibberührung stehen, wobei die Schwenkscheiben (4,14) in dem die Achsen der Antriebs- und Abtriebsteile (2,12 bzw. 3,13) umschließenden Gehäusering (10,20) frei schwenkbar gelagert sind und daß der Gehäusering (10,20) axial verstellbar angeordnet ist.

FIG.8

# SCHWENKSCHEIBEN-REIBGETRIEBE

Die Erfindung betrifft ein Schwenkscheiben-Reibgetriebe mit mindestens einem Antriebs- und mindestens einem Abtriebsteil, mit konkaven Mantelprofilen und koaxialer Anordnung und zwischen diesen in einem Gehäusering schwenkbar angeordnete, drehbare Schwenkscheiben zur Drehkraftübertragung, mit konvexen Mantelprofilen, die jeweils gleichzeitig mit einem konvexen Mantelprofil eines Antriebs- und eines Abtriebsteiles in Reibberührung stehen.

Ein Getriebe dieser Art ist bekannt aus der DE-A 30 02 034 und dient der stufenlosen Drehzahlverstellung einer Abtriebswelle. Bei diesem und anderen bekannten Reibgetrieben ist der Gehäusering ortsfest gehalten und sind die Schwenkscheiben um ortsfeste Drehpunkte zwangläufig schwenkbar angeordnet. Dies führt dazu, daß infolge der nicht zu umgehenden Herstellungstoleranzen ein Zwangsschlupf auftritt, der nicht nur einen raschen Verschleiß, und damit ungenaue Übertragungsverhältnisse bewirkt, sondern auch dazu führt, daß die zulässigen Flächenpressungen relativ gering sind, weshalb die Abmessungen geeigneter Getriebe relativ groß sein müssen. Hinzu kommt, daß ein relativ großer Leistungsbedarf für die Stellhydraulik erforderlich ist.

Je geringer der Zwangsschlupf ist, desto größere Flächenpressungen bei gleichzeitig größerer Übertragungsfläche sind zulässig, so daß auch ein größeres Drehmoment übertragen werden kann. Es ergibt sich somit ein besserer Übertragungswirkungsgrad.

Um bei einem Schwenkscheiben-Reibgetriebe einen Zwangsschlupf zu vermeiden, ist es in bekannter Weise erforderlich, daß die Tangente im Berührungspunkt durch den Schnittpunkt der Drehachsen der beiden Reibkörper geht. In diesem Fall kann die Berührungsfläche beliebig breit ausgeführt sein, ohne daß ein Zwangsschlupf auftritt. Dieses Prinzip läßt sich aber bei den bekannten Schwenkscheiben-Reibgetrieben in der Praxis nicht verwirklichen, weil die einzelnen Getriebeglieder zwangsgeführt sind und sich nicht aufeinander einzustellen vermögen.

Der Erfindung liegt daher die Aufgabe zugrunde, ein Schwenkscheiben-Reibgetriebe der eingangs erwähnten Bauart so auszubilden, daß es weitestgehend zwangsschlupffrei arbeitet und eine Vereinfachung der Stelleinrichtungen ermöglicht.

Diese Aufgabe wird erfindungsgemäß durch die kennzeichnenden Merkmale des Anspruches 1 gelöst. Die axiale Verschiebung der Schwenkscheiben bewirkt gegenüber den bekannten Getrieben, daß beim erfindungsgemäßen Getriebe ein zusätzlicher Freiheitsgrad realisiert wird und sich jede beliebige Konstruktion der Getriebeteile ermöglichen läßt. Hierdurch ergeben sich mit denkbar einfachen Stelleinrichtungen interessante, raumsparende Übersetzungsverhältnisse.

Die freischwenkbare Lagerung der Schwenkscheiben ermöglicht es diesen, sich selbstätig einzustellen, so daß etwaige Toleranzunterschiede ausgeglichen und ein Zwangsschlupf weitestgehend vermieden werden.
Eine vorteilhafte Ausgestaltung der Erfindung ergibt sich dann, wenn auch der Gehäusering radial frei bewegbar angeordnet ist, so daß sich eine Selbsteinstellung auch in radialer Richtung zwischen den Schwenkrollen und den An- und Abtriebsteilen ergibt.

Weitere vorteilhafte Ausgestaltungen ergeben sich aus den weiteren Unteransprüchen und sind in der nachfolgenden Beschreibung von Ausführungsbeispielen der Erfindung anhand der Zeichnung näher erläutert. Es zeigen:

Fig.1 einen schematischen Längsschnitt durch ein einstufiges Schwenkscheiben-Reibgetriebe nach der Erfindung,

Fig.2 ein Schemabild der geometrischen Beziehungen

Fig.3 einen schematischen Längsschnitt durch ein zweistufiges Schwenkscheiben-Reibgetriebe mit mechanischer Stelleinrichtun

Fig.4 einen schematischen Längsschnitt durch ein Schwenkscheiben-Reibgetriebe mit einer anderen mechanischen Stelleinrichtung,

Fig.5 einen schematischen Längsschnitt durch ein Schwenkscheiben-Reibgetriebe mit einer hydraulischen bzw. pneumatischen Stelleinrichtung,

Fig.6 eine schematische Draufsicht auf eine weitere mechanische Stelleinrichtung bei einem Schwenkscheiben-Reibgetriebe,

Fig.7 eine schematische Draufsicht auf die Stelleinrichtung der Fig.6 in ausgelenkter Stellung und

Fig.8 einen schematischen Längsschnitt durch ein zweistufiges Schwenkscheiben-Reibgetriebe gemäß der Erfindung mit einem Rückwärtsgang

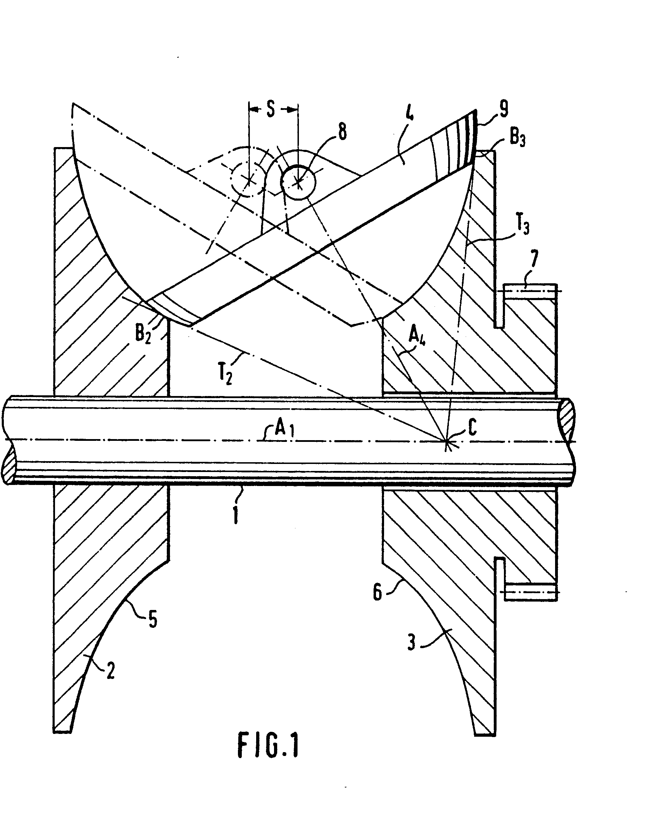

Fig.1 zeigt schematisch ein Schwenkscheiben-Reibgetriebe gemäß der Erfindung. Es besteht im wesentlichen aus einem auf einer Antriebswelle 1 sitzenden und mit dieser fest verbundenen Antriebsteil 2, einem auf der gleichen Antriebswelle 1 lose umlaufenden Abtriebsteil 3 und lose umlaufenden Schwenkscheiben 4, die mit dem Antriebsteil 2 und dem Abtriebsteil 3 in Reibberührung stehen.

Das Antriebsteil 2 und das Abtriebsteil 3 weisen jeweils im Längsschnitt konvexe, zueinander auf einen Mindestradius auslaufende Mantelflächen 5 bzw. 6 auf. Einstückig und koaxial mit dem Abtriebsteil 3 ist ein Abtriebsritzel 7 fest verbunden.

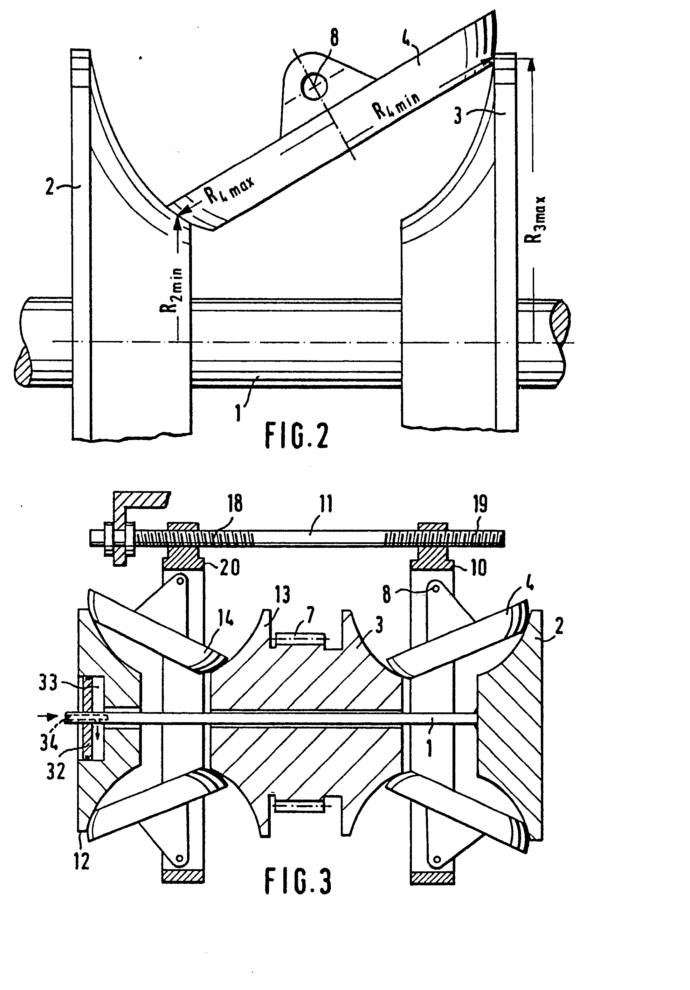

Die um die Antriebswelle 1 angeordneten Schwenkscheiben 4, von denen nur eine in der Zeichnung in zwei verschiedenen Stellungen dargestellt ist, sind im Drehpunkt 8 frei schwenkbar in einem in Fig.1 nicht, jedoch in Fig.2 dargestellten Gehäusering 10 gelagert. Dieser Gehäusering 10 ist etwa koaxial zur Antriebswelle 1, jedoch radial frei bewegbar im Gehäuse 16 gehalten. Die Schwenkscheiben 4 stehen mit ihrer konvexen Mantelfläche 9 mit den Mantelflächen 5 und 6 der An- und Abtriebsteile 2 und 3 in Reibberührung.

Wie die Zeichnung (Fig.1 und 2) ferner schematisch angibt, ist der Gehäusering 10 mit den Drehpunkten 8 axial, d.h. parallel zur Achse der Antriebswelle 1 um den Weg S verschiebbar angeordnet, während die Antriebs- und Abtriebsteile 2 und 3 axial ortsfest auf der Antriebswelle 1 sitzen.

Die an den Berührungspunkt B2 zwischen der Schwenkscheibe 4 und dem Antriebsteil 2 angelegte Tangente T2 schneidet die Achse A1 der Antriebswelle 1 in ihrem Schnittpunkt C mit der Achse A4 der Schwenkscheibe. Durch den gleichen Schnittpunkt C geht auch eine Tangente T3 im Berührungspunkt B3 zwischen der Schwenkscheibe 4 und dem Abtriebsteil 3. Es ergibt sich bei dieser Anordnung eine zwangsschlupffreie Übertragung im gesamten Übersetzungsbereich mit einer guten Anschmiegung zwischen den Schwenkscheiben 4 und dem An- bzw. Abtriebsteil 2 bzw. 3. Es sind somit relativ große Berührungsflächen zu erwarten.

Wie Fig. 2 zeigt, ist es bei diesem Getriebe möglich, die Berührungspunkte $B_2$ und $B_3$ der Schwenkscheiben 4 mit dem Antriebs- und Abtriebsteil 2 bzw.3 auf unterschiedlichen Radien $R_{2min}$ und $R_{3max}$ der An- und Abtriebsteile 2 und 3 und auf entsprechend inversen unterschiedlichen Radien $R_{4max}$ und $R_{4min}$ der Schwenkscheiben 4 zu halten.

Zur Definition sei hier angemerkt, daß sich die Begriffe "axial" und "radial" - sofern nicht anders bezeichnet - auf die Achsrichtung der Antriebswelle 1 beziehen.

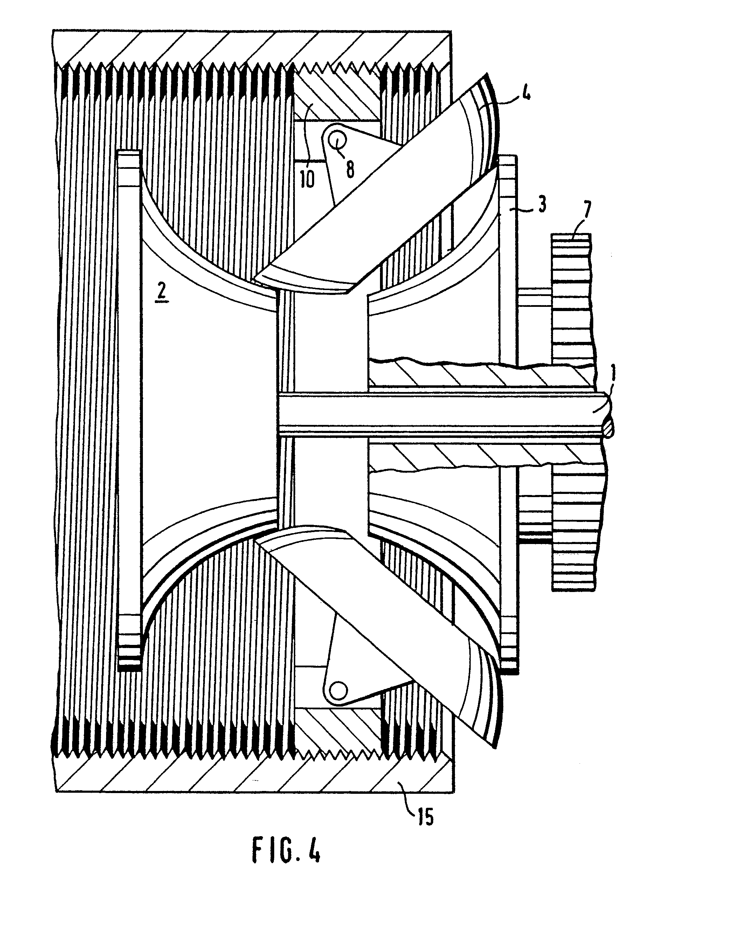

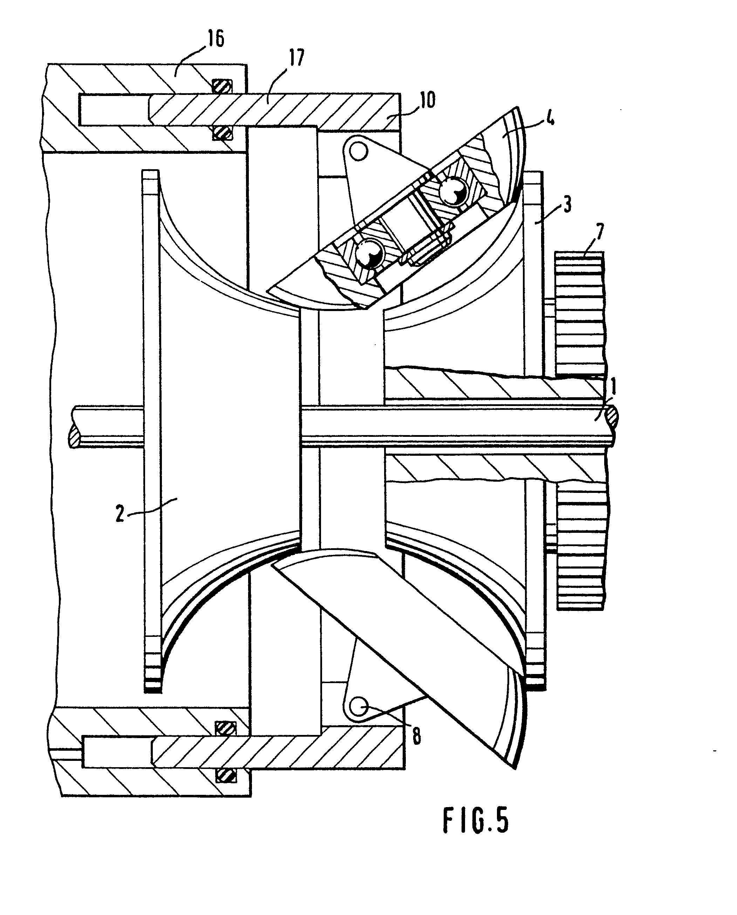

Die Fig. 3 - 5 zeigen verschiedene Stelleinrichtungen für die axiale Verschiebung des Gehäuseringes 10. Fig.3 zeigt eine einfache Möglichkeit mittels einer parallel zur Achse der Antriebswelle 1 angeordneten Gewindespindel 11, Fig.4 eine Stelleinrichtung, bestehend aus einem den Gehäusering 10 übergreifenden drehbaren Gewindering 15 und Fig.5 einen axial im Gehäuse 16 als Druckmittelkolben 17 ausgebildeten Ringflansch, der einstückig mit dem Gehäusering 10 verbunden ist und mit einem Druckmittel beaufschlagbar ist. Im Rahmen des Erfindungsgedankens sind weitere axial bewegbare Stelleinrichtungen im Griffbereich des Fachmannes.

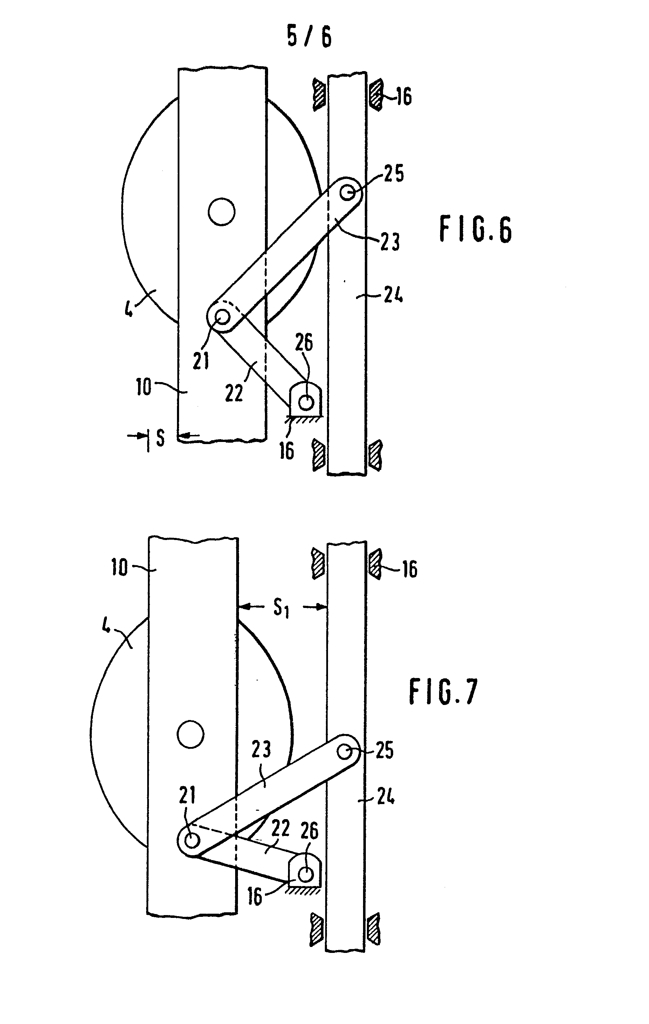

So zeigen die Fig.6 und 7 in zwei Stellungen eine weitere Möglichkeit zur axialen Verstellung des Gehäuseringes 10. Dabei ist der Gehäusering 10 am Gelenkpunkt 21 mindestens eines Schubstangenpaares 22,23 angelenkt, dessen eine Schubstange 22 ortsfest am Gehäuse 16 und dessen andere Schubstange 23 an einem im Gehäuse 16 zwar drehbar gelagerten, aber axial nicht verschiebbaren Steuerring 24 abgestützt sind. Der Steuerring 24 ist wiederum mit einem nicht dargestellten Steuerglied verbunden. Wird der Steuerring 24 gedreht, so verschiebt sich das freie Ende 25 der Schubstange 23 in Richtung zum Lagerpunkt 26 der anderen Schubstange 22 im Gehäuse 16 und es ergibt sich zugleich eine Vergrößerung des axialen Abstandes S1 des Steuerringes 24 zum Gehäusering 10.

Wenn, wie im Falle der Fig.3 ein Getriebe mit zwei Antriebsteilen 2,12 und einem dazwischenliegenden doppelten Abtriebsteil 3,13 vorliegt, sind zwei Gehäuseringe 10,20 für die den Antriebsteilen zugeordneten Schwenkscheiben 4,14 erforderlich, die dann gegenläufig axial bewegt werden müssen. Hierfür eignet sich in einfacher Weise eine Gewindespindel 11 mit Rechts- und Linksgewinde 18,19. Ferner ist es zweckmäßig, wenn die beiden Antriebsteile 2,12 durch ein Druckmittel oder dgl. gegeneinander gedrückt werden. Hierdurch wird die für die Kraftübertragung erforderliche Anpreßkraft auf die Schwenkscheiben 4,14 erzeugt. Dies kann, wie Fig.3 zeigt, dadurch geschehen, daß ein Antriebsteil, z.B. 12, axial verschiebbar auf der Antriebswelle sitzt, die einen mit ihr fest verbundenen Kolben 32 trägt. Dieser sitzt in einer im Antriebsteil 12 angeordneten zylinderraumartigen Ausnehmung 33, in die durch eine Axialbohrung 34 in der Antriebswelle 1 ein Druckmittel zugeführt bzw. abgeführt werden kann.

Mit dieser Anordnung erfolgt eine Trennung der Aufgaben des Anpressens und des Verstellens der Schwenkscheiben 4,14. Die erforderliche hydraulische Leistung ist theoretisch gleich Null, weil die An- und Abtriebsteile 2,12 und 3,13 keinen Hub ausführen. Es erfolgt lediglich eine einfache Anpassung der Drehkräfte an das Drehmoment, und es ist eine Verstellung im Stillstand durch entsprechende Absenkung des Anpreßdruckes möglich. In diesem Falle ist es vorteilhaft, wenn die Schwenkscheiben 4,14 der Wirkung einer (nicht dargestellten) Rückstellfeder ausgesetzt sind, die sie in eine Stellung drückt, in der die geringste Übersetzung vorliegt. Modellversuche ergeben daß alle Schwenkscheiben 4,14 sich in das gleiche Übersetzungsverhältnis einlaufen, da nur dann ein Kräfte gleichgewicht vorliegt. Damit entfällt auch ein Zwangs schlupf zwischen den Getriebeteilen.

Bei allen kraftschlüssig arbeitenden, stufenlos schaltba ren Getrieben besteht das Problem, große Eingangsdrehmo mente bei gleichzeitig großem Stellbereich in dem durch äußere Bedingungen vorgegebenen Bauraum unterzubringen Aus diesem Grunde wird meist dem Verstellgetriebe ein vor oder nachgeordneter lastschaltbarer Planetengetriebesatz zugeordnet.

Dieser zusätzliche Aufwand kann bei einem Getriebe gemäß der Erfindung dadurch vermieden werden, daß, wie Fig.7 zeigt, in die Schwenkscheiben 4 ein zusätzliches Überset zungsverhältnis gelegt wird. Dabei ist die Kurvenform der Mantelflächen 5,6,9 der Antriebs- und Abtriebsteile 2,3 und der Schwenkscheiben 4 so ausgebildet, daß in der Extremübersetzungslagen das Antriebsteil 2 auf einen Mindestradius $R_{2min}$ die Schwenkscheiben 4 auf deren Maximalradius $R_{4max}$, und das Abtriebsteil 3 auf einen Maximalradius $R_{3max}$ die Schwenkscheiben 4 auf deren Mindestradius $R_{4min}$ berühren und umgekehrt.

Hierdurch ergibt sich für das gleiche Eingangsdrehmoment und das gleiche Übersetzungsverhältnis im Verhältnis zur herkömmlichen Bauweise ein deutlich kleinerer Außendurch messer bzw. Bauraum des Getriebes.

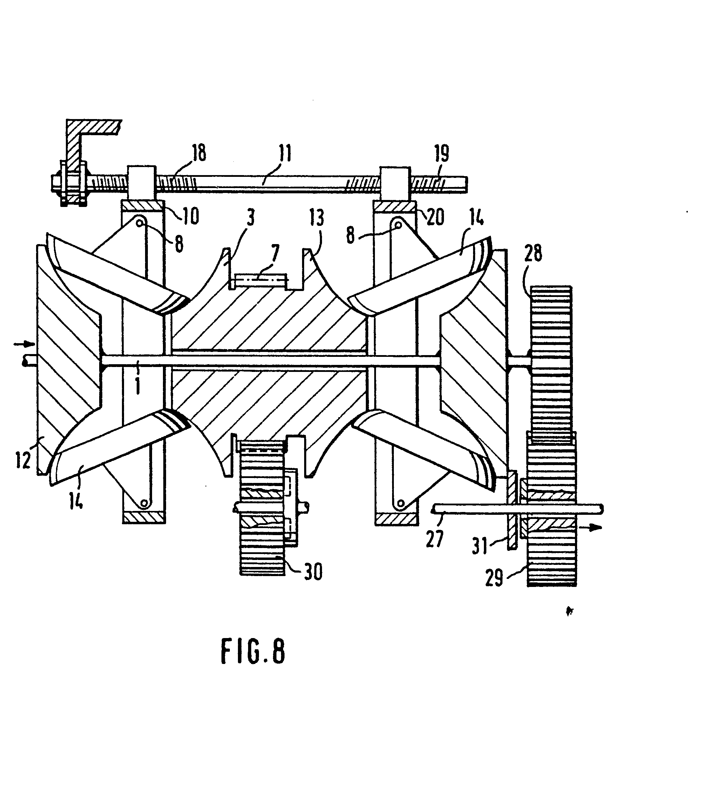

Fig.8 zeigt ein Getriebe gemäß der Erfindung mit der Möglichkeit, die Abtriebsdrehrichtung umzukehren (Rück wärtsgang). Bei dem in der oben beschriebenen Weise aufgebauten Getriebe mit zwei Antriebsteilen 2,12 und einem dazwischen liegenden doppelten Abtriebsteil 3,13 ist zwischen dem Antriebsteil 2 und der Abtriebswelle 27 eine Zahnradstufe zugeordnet. Diese besteht aus einem mit einem Antriebsritzel 28 kämmenden und auf der Abtriebswelle 27 lose umlaufenden Abtriebszahnrad 29. Das Abtriebsritzel ' des Abtriebsteiles 3,13 kämmt mit einem weiteren Abtriebs- zahnrad 30, das lose auf der Abtriebswelle 27 sitzt. Auf dieser Abtriebswelle 27 sitzt ferner eine umschaltbare Kupplung 31, die die Abtriebswelle 27 wahlweise mit einem der Abtriebszahnräder 29,30 kuppelt. Der Rückwärtsgang hat dabei eine feste Übersetzung. (Abtriebszahnrad 29).

Das Getriebe kann ein- oder mehrteilig sein, d.h. mit einem oder mehr An- und Abtriebsteilen 2,12 und 3,13 ausgebildet sein und drei oder vier Schwenkscheiben 4,14 aufweisen. So vergrößert sich das übertragbare Drehmoment bei Verwendung von vier statt drei Schwenkscheiben um ca. 30%, während sich eine Vergrößerung des übertragbaren Drehmomentes von etwa 100% beim Übergang von einem auf zwei Antriebsteile 2,12 erzielen läßt.

Wie Fig.5 zeigt, kann jede Schwenkscheibe 4 oder 14 als Teil einer Druckmitteleinheit ausgebildet sein, die auf einem schwenkbar im Drehpunkt 8 des Gehäuseringes 10 bzw. 20 gehaltenen Zapfen 32 sitzt und in dessen Achsrichtung, d.h. radial zum Drehpunkt 8 bewegbar sein. Hierdurch läßt sich mit sparsamen und konstruktiv einfachen und wirksamen Mitteln der erforderliche Anpreßdruck verwirklichen, ohne daß das Druckmittel durch umlaufende Teile zugeführt werden muß.

PATENTANWALT
Dipl.-Ing. Wolfgang K. Rauh
krefelder Str. 35 - Tel. (0241) 15 12 62
D-5100 AACHEN 1

0207184

Anm.Prof.Dr.-Ing.Jürgen HELLING, B-4680 GEMMENICH
Dr.-Ing. Ulrich ROHS, D-5160 DÜREN

Anwaltsakte 1-760/20

PATENTANSPRÜCHE

1. Schwenkscheiben-Reibgetriebe mit mindestens einem Antriebs- und mindestens einem Abtriebsteil, mit konkaven Mantelprofilen und koaxialer Anordnung und zwischen diesen in einem Gehäusering schwenkbar angeordnete, drehbare Schwenkscheiben zur Drehkraftübertragung, mit konvexen Mantelprofilen, die jeweils gleichzeitig mit einem konvexen Mantelprofil eines Antriebs- und eines Abtriebsteiles in Reibberührung stehen, **dadurch gekennzeichnet,** daß die Schwenkscheiben (4,14) in dem die Achsen der Antriebs- und Abtriebsteile (2,12 und 3,13) umschließenden Gehäusering (10,20) frei schwenkbar gelagert sind und daß der Gehäusering (10,20) axial verstellbar angeordnet ist.

2. Getriebe nach Anspruch 1,**dadurch gekennzeichnet,** daß jeder Gehäusering (10,20) radial frei bewegbar angeordnet ist.

3. Getriebe nach Anspruch 1 oder 2, **dadurch gekennzeichnet,** daß die Kurvenform der Mantelflächen (5,6 und 9) der An- und Abtriebsteile (2,12 und 3,13 ) sowie der Schwenkscheiben (4,14) so ausgebildet sind, daß in den Extremübersetzungslagen das Antriebsteil (2,12) auf einem Mindestradius ($R_{2min}$) die Schwenkscheiben (4,14) auf deren Maximalradius ($R_{4max}$) und die Abtriebsscheibe

- 1 -

(3,13) auf einem Maximalradius ($R_{3max}$) die Schwenk- scheiben (4,14) auf deren Mindestradius ($R_{4min}$) berüh- ren und umgekehrt.

4. Getriebe nach einem der Ansprüche 1 bis 3, **dadurch gekennzeichnet**, daß die Tangente (T2 bzw.T3) im Berührungspunkt (B2 bzw. B3) zwischen einer Schwenkscheibe (4) und dem An- bzw. Abtriebsteil (2 bzw.3) durch den Schnittpunkt (C) der entsprechenden Drehach- sen (A1,A4) der An- und Abtriebsteile 2 und 3 sowie der Schwenkscheiben 4 geht.

5. Getriebe nach einem der Ansprüche 1 bis 4, **dadurch gekennzeichnet**, daß die An- und Abtriebsteile (2,12 und 3,13) unterschiedlich groß sind.

6. Getriebe nach einem der Ansprüche 1 bis 5, **dadurch gekennzeichnet**, daß die Mantelprofile der An- und Abtriebsteile (2,12 und 3,13) so ausgelegt sind, daß bei der axialen Verschiebung und gleichzeitigen Verschwenkung der Schwenkscheiben (4,14) von einer Extrem- übersetzung in die andere die An- und/oder Abtriebsteile (2,12;3,13) keine Axialbewegung ausführen.

7. Getriebe nach einem der Ansprüche 2 bis 6, **dadurch gekennzeichnet**, daß zur axialen Verstellung des Gehäuseringes (10,20) für die Schwenkscheiben (4) mindestens eine Gewindespindel (11) vorgesehen ist.

8. Getriebe nach einem der Ansprüche 2 bis 6, **dadurch gekennzeichnet**, daß zur axialen Verstellung des Gehäuseringes (10,20) für die Schwenkscheiben (4,14) ein koaxialer Gewindering (15) vorgesehen ist.

9. Getriebe nach einem der Ansprüche 2 bis 6, **dadurch gekennzeichnet**, daß zur axialen Verstellung des Gehäuseringes (10,20) für die Schwenkscheiben (4,14) eine hydraulische oder pneumatische Schubeinrichtung (16,17) vorgesehen ist.

10. Getriebe nach einem der Ansprüche 1-6, **dadurch gekennzeichnet,** daß der axial verstellbare Gehäusering (10,20) am Gelenkpunkt (21) mindestens **eines** Schubstangenpaares (22,23) angelenkt ist, dessen eine Schubstange (22) ortsfest am Gehäuse (16) und dessen andere Schubstange (23) an einem im Gehäuse (16) im wesentlichen koaxial zum Gehäusering (10,20) drehbar gelagerten, axial nicht verschiebbaren Steuerring (24) abgestützt sind und daß der Steuerring (24) mit einem Steuerglied verbunden ist.

11. Getriebe nach einem der Ansprüche 1 bis 10, **dadurch gekennzeichnet,** daß jeder Schwenkscheibe (4,14) eine Rückstellfeder zugeordnet ist, die diese in eine Stellung drückt, in der eine Übersetzung ins Langsame erfolgt.

12. Getriebe nach einem der Ansprüche 1 bis 11, **dadurch gekennzeichnet,** daß einem am Abtriebsritzel (7) des Abtriebsteiles (3,13) angreifenden Abtriebszahnrad (30) und einem, an einem Antriebsritzel (28) des Antriebsteiles (2 bzw.12) angreifenden weiteren Abtriebszahnrad (29) eine Wechselkupplung (31) zugeordnet ist, die wahlweise das eine oder das andere Abtriebszahnrad (30,29) mit einer Abtriebswelle (27) verbindet.

13. Getriebe nach einem der Ansprüche 1 bis 12, **dadurch gekennzeichnet,** daß jede Schwenkscheibe (4,14) jeweils als Teil einer Druckmitteleinheit ausgebildet ist, der gegenüber seiner Schwenklagerung (8) radial bewegbar gehalten ist und daß auf die Schwenkscheibe 4 bzw.14 eine Druckmittelkraft einwirkt.

Für Prof.Dr.-Ing. HELLING
und Dr.-Ing. ROHS:

Dipl.-Ing. Wolfgang K. Rauh
P A T E N T A N W A L T

FIG.1

FIG.2

FIG.3

FIG. 4

0207184

FIG.5

0207184

FIG.6

FIG.7

FIG.8

Europäisches
Patentamt

## EUROPÄISCHER RECHERCHENBERICHT

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | US-A-3 302 474 (W.N. EDLICH) * Spalte 1, Zeile 49 - Spalte 2, Zeile 52; Figuren 1-3 * | 1,6-8 | F 16 H 15/38 |
| A | CH-A- 297 536 (G. STRECKER) * ganzes Dokument * | 1,3,4 | |
| A | CH-A- 182 149 (J. ARTER) * Patentanspruch; Figuren 1, 2 * | 1,2 | |
| A | DE-A-2 807 971 (DAIMLER-BENZ) * Ansprüche 1-4; Figur * | 1,4,6 9 | |
| A | US-A-2 140 012 (F.A. HAYES) * Figur 3 * | 5,12 | |
| | | | RECHERCHIERTE SACHGEBIETE (Int. Cl.4) |
| A | DE-C- 491 825 (A.F. GERDES) | | F 16 H 15/00 |
| A | FR-A- 997 509 (GRYSPEERT) | | |

Der vorliegende Recherchenbericht wurde für alle Patentansprüche erstellt

| Recherchenort | Abschlußdatum der Recherche | Prüfer |
|---|---|---|
| BERLIN | 14-02-1986 | LEMBLE Y.A.F.M. |